# EUROPEAN PATENT APPLICATION

(11) **EP 4 280 648 A1**
(43) Date of publication of application: **22.11.2023**
(21) Application number: 21919356.2
(22) Date of filing: 14.01.2021
(51) Int. Cl.: H04W 16/14

(54) **BASE STATION AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); PI, Qiping, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2021/001123
(87) International publication number: WO 2022/153463

(57) **Abstract**

A terminal has: a receiving unit configured to receive a downlink control channel and a plurality of downlink shared channels that are scheduled; and a control unit configured to assume, when receiving the downlink shared channels, a plurality of starting positions of the downlink shared channels in the time domain, in slots in which LBT (Listen Before Talk) is needed or in slots in which the periodicity of monitoring of the downlink control channel can be one slot or longer, among the slots in which the plurality of downlink shared channels are scheduled.

## Description

### [FIELD OF THE INVENTION]

The present invention relates to a terminal, a base station, and a communication method in a wireless communication system.

### [BACKGROUND OF THE INVENTION]

In NR (New Radio) (also known as "5G"), which is a successor system of LTE (Long Term Evolution), discussions are performed to satisfy requirements such as large system capacity, high data transmission speed, low delay, simultaneous connection of many terminals, low cost, and power saving, by using various techniques (see, for example, Non-Patent Document 1).

In NR release 17, the use of higher frequency bands than previous releases (see, for example, Non-Patent Document 2) is being discussed. For example, applicable numerologies including subcarrier spacing and channel bandwidth, the design of the physical layer, possible obstacles in actual wireless communication, and so forth, in the frequency band from 52.6 GHz to 71 GHz are being discussed.

### [Related-Art Documents]

### [Non-Patent Documents]

[Non-Patent Document 1] 3GPP TS 38.300 V16.2.0 (2020-07)
[Non-Patent Document 2] 3GPP TS 38.306 V16.1.0 (2020-07)

### [SUMMARY OF THE INVENTION]

### [TECHNICAL PROBLEM]

In order to reduce the load required for PDCCH (Physical Downlink Control CHannel) monitoring in a newly operated frequency band that uses a higher frequency than conventional frequencies, discussions are being performed to make the periodicity of monitoring longer. On the other hand, discussions are being performed to support scheduling of multiple PDSCHs (Physical Downlink Shared Channel) or multiple PUSCHs (Physical Uplink Shared Channel) in order to ensure the flexibility of scheduling even in a case where the periodicity of PDCCH monitoring is made longer.

However, for example, in a case where LBT (Listen Before Talk) is performed immediately before a transmission in an unlicensed band, there is a possibility of losing the transmission opportunity due to the LBT failure.

The present invention has been made in view of the above, and enables scheduling that is suitable for the communication scheme in a wireless communication system.

### [SOLUTION TO PROBLEM]

According to the technique of the present disclosure, a terminal is provided. This terminal has: a receiving unit configured to receive a downlink control channel and a plurality of downlink shared channels that are scheduled; and a control unit configured to assume, when receiving the downlink shared channels, a plurality of starting positions of the downlink shared channels in the time domain, in slots in which LBT (Listen Before Talk) is needed or in slots in which the periodicity of monitoring of the downlink control channel can be one slot or longer, among the slots in which the plurality of downlink shared channels are scheduled.

### [ADVANTAGEOUS EFFECTS OF INVENTION]

According to the technique disclosed herein, it is possible to apply scheduling that is suitable for the communication scheme in a wireless communication system.

### [BRIEF DESCRIPTION OF THE DRAWINGS]

[FIG. 1] FIG. 1 is a drawing illustrating an example structure of a wireless communication system according to an embodiment of the present invention;
[FIG. 2] FIG. 2 is a drawing illustrating an example of a frequency range according to the embodiment of the present invention;
[FIG. 3] FIG. 3 is a drawing illustrating an example of LBT;
[FIG. 4] FIG. 4 is a flowchart illustrating an example of a receiving operation according to the embodiment of the present invention;
[FIG. 5] FIG. 5 is a drawing illustrating an example (1) of scheduling according to the embodiment of the present invention;
[FIG. 6] FIG. 6 is a drawing illustrating an example (2) of scheduling according to the embodiment of the present invention;
[FIG. 7] FIG. 7 is a drawing illustrating an example (3) of scheduling according to the embodiment of the present invention;
[FIG. 8] FIG. 8 is a drawing illustrating an example (4) of scheduling according to the embodiment of the present invention;
[FIG. 9] FIG. 9 is a drawing illustrating an example (5) of scheduling according to the embodiment of the present invention;
[FIG. 10] FIG. 10 is a drawing illustrating an example (6) of scheduling according to the embodiment of the present invention;
[FIG. 11] FIG. 11 is a drawing illustrating an example (7) of scheduling according to the embodiment of the present invention;
[FIG. 12] FIG. 12 is a drawing illustrating an example (8) of scheduling according to the embodiment of the present invention;
[FIG. 13] FIG. 13 is a drawing illustrating an example of a functional structure of a base station 10 according to the embodiment of the present invention;
[FIG. 14] FIG. 14 is a drawing illustrating an example of a functional structure of a terminal 20 according to the embodiment of the present invention; and
[FIG. 15] FIG. 15 is a drawing illustrating an example hardware structure of the base station 10 or the terminal 20 according to the embodiment of the present invention.

### [DETAILED DESCRIPTION OF THE PREFERRED EMBODIMENTS]

Hereinafter, an embodiment of the present invention will be described with reference to the accompanying drawings. Note that the embodiment described below is an example, and the embodiments to which the present invention can be applied are not limited to the following embodiment.

In operating the wireless communication system according to the embodiment of the present invention, existing techniques may be used as appropriate. The existing techniques include, but are not limited to, for example, existing LTE. Also, the term "LTE" as used herein shall also have a broad meaning including LTE-Advanced, as well as successor systems of LTE-Advanced (for example, NR), unless specified otherwise.

Also, in the embodiment of the present invention described below, terms that are used in existing LTE, such as SS (Synchronization Signal), PSS (Primary SS), SSS (Secondary SS), PBCH (Physical Broadcast CHannel), PRACH (Physical Random Access CHannel), PDCCH (Physical Downlink Control CHannel), PDSCH (Physical Downlink Shared CHannel), PUCCH (Physical Uplink Control CHannel), and PUSCH (Physical Uplink Shared CHannel) are used. This is only for ease of description, and signals, functions, and so forth that are similar to these may be referred to by other names as well. Also, the above terms in NR correspond to NR-SS, NR-PSS, NR-SSS, NR-PBCH, NR-PRACH, and the like. However, signals used in NR will not be always written with the prefix "NR-."

Also, in the embodiment of the present invention, the duplex scheme may be a TDD (Time Division Duplex) scheme, an FDD (Frequency Division Duplex) scheme, or other schemes (including, for example, a flexible duplex scheme).

Also, in the embodiment of the present invention, when a wireless parameter or the like is "configured", this may mean that a predetermined value is configured in advance (that is, "preconfigured"), or that a wireless parameter is indicated and configured by a base station 10 or a terminal 20.

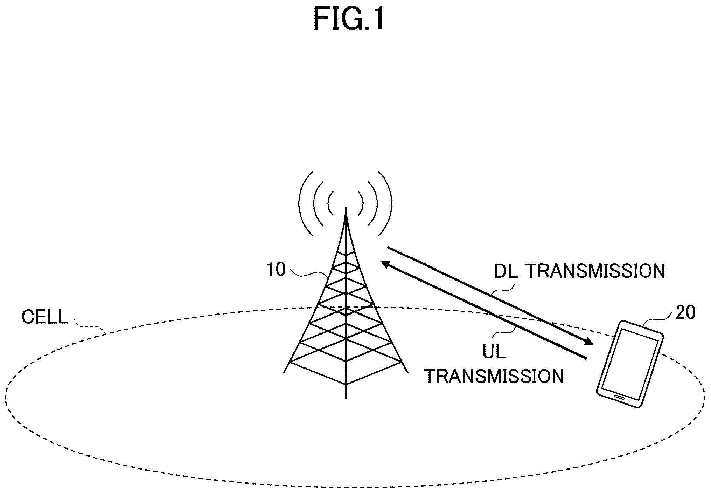

FIG. 1 is a drawing illustrating a wireless communication system according to the embodiment of the present invention. The wireless communication system according to the embodiment of the present invention includes a base station 10 and a terminal 20, as illustrated in FIG. 1. In FIG. 1, one base station 10 and one terminal 20 are illustrated, but this is an example, and there may be more than one of each.

The base station 10 is a communication device that provides one or more cells and performs wireless communication with the terminal 20. The physical resources of radio signals are specified in the time domain and the frequency domain. The time domain resources may be defined or referred to as OFDM (Orthogonal Frequency Division Multiplexing) symbols, and the frequency domain resources may be defined or referred to as sub-carriers or resource blocks. The base station 10 transmits synchronization signals and system information to the terminal 20. The synchronization signals are, for example, NR-PSS and NR-SSS. The system information is, for example, transmitted by NR-PBCH and is also referred to as "broadcast information". The synchronization signals and system information may be referred to as "SSB" (SS/PBCH block). As shown in FIG. 1, the base station 10 transmits control signals or data to the terminal 20 in DL (DownLink), and receives control signals or data from the terminal 20 in UL (UpLink). The base station 10 and the terminal 20 are both capable of performing beamforming and transmitting and receiving signals. Also, the base station 10 and the terminal 20 both can apply MIMO (Multiple Input Multiple Output)-based communication to DL or UL. Also, the base station 10 and the terminal 20 both may communicate via a secondary cell (SCell: Secondary Cell) and a primary cell (PCell: Primary Cell) based on CA (Carrier Aggregation). Furthermore, the terminal 20 may communicate via a primary cell of the base station 10 and a primary secondary cell group cell (PSCell: Primary SCG Cell) of another base station 10 based on DC (Dual Connectivity).

The terminal 20 is a communication device with wireless communication functions, such as a smartphone, a cellular phone, a tablet, a wearable terminal, and an M2M (Machine-to-Machine) communication module. As illustrated in FIG. 1, the terminal 20 utilizes various communication services provided by a wireless communication system by receiving control signals or data in DL from the base station 10 and transmitting control signals or data in UL to the base station 10. Also, the terminal 20 receives various reference signals transmitted from the base station 10, and measures channel quality based on the reception result of the reference signals.

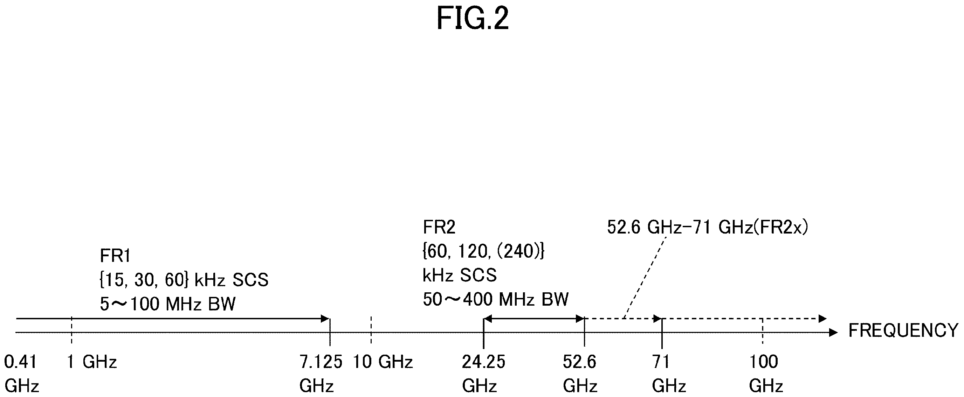

FIG. 2 is a drawing illustrating an example of a frequency range according to the embodiment of the present invention. In 3GPP release 15 and release 16 NR technical specifications, for example, operations using frequency bands of 52.6 GHz and above are being discussed. Note that, as shown in FIG. 2, an FR (Frequency Range) 1, which is currently specified for operations, is the frequency band from 410 MHz to 7.125 GHz, where the SCS (SubCarrier Spacing) is 15, 30 or 60 kHz, and the bandwidth is from 5 MHz to 100 MHz. An FR 2 is the frequency band from 24.25 GHz to 52.6 GHz, where the SCS is 60, 120 or 240 kHz, and the bandwidth is 50 MHz to 400 MHz. For example, a newly operated frequency band may be assumed to range from 52.6 GHz to 71 GHz. Furthermore, it is also possible to assume supporting the frequency band above 71 GHz.

As described above, a newly operated frequency band has a significantly higher carrier frequency than that of the conventional frequency band, and, as a result, for example, the following problems (1) to (3) might arise:

### (1) Significant phase noise

This problem requires, for example, the use of larger SCS or a single-carrier waveform.

### (2) Significant propagation loss

Due to this problem, for example, narrower beams and a larger number of beams are required.

### (3) High sensitivity in the PAPR (Peak to Average Power Ratio) and nonlinearity of the PA (Power Amplifier)

This problem requires, for example, the use of larger SCS (that is, a smaller number of FFT points), a mechanism to reduce the PAPR, and a single-carrier waveform.

Considering the above problems, for example, a waveform that is based on CP-OFDM (Cyclic Prefix Orthogonal Frequency Division Multiplexing)/DFT-S-OFDM (Discrete Fourier Transform Spread OFDM) and that uses larger SCS may be the waveform in a newly operated frequency band.

On the other hand, in a case where the slot structure with 14 symbols is maintained, as shown in Table 1, in which the relationship between SCS and symbol duration is shown, the symbol/CP duration and the slot duration become shorter as the SCS increases.

**[Table 1]**

| SCS | 15 kHz | 30 kHz | 60 kHz | 120 kHz | 240 kHz | 480 kHz | 960 kHz |
|---|---|---|---|---|---|---|---|
| Symbol Duration | 66.6 µs | 33.3 µs | 16.65 µs | 8.325 µs | 4.1625 µs | 2.08125 µs | 1.040625 µs |

As shown in Table 1, when the SCS is 15 kHz, the symbol duration is 66.6 microseconds. When the SCS is 30 kHz, the symbol duration is 33.3 microseconds. When the SCS is 60 kHz, the symbol duration is 16.65 microseconds. When the SCS is 120 kHz, the symbol duration is 8.325 microseconds. When the SCS is 240 kHz, the symbol duration is 4.1625 microseconds. When the SCS is 480 kHz, the symbol duration is 2.08125 microseconds. When the SCS is 960 kHz, the symbol duration is 1.040625 microseconds.

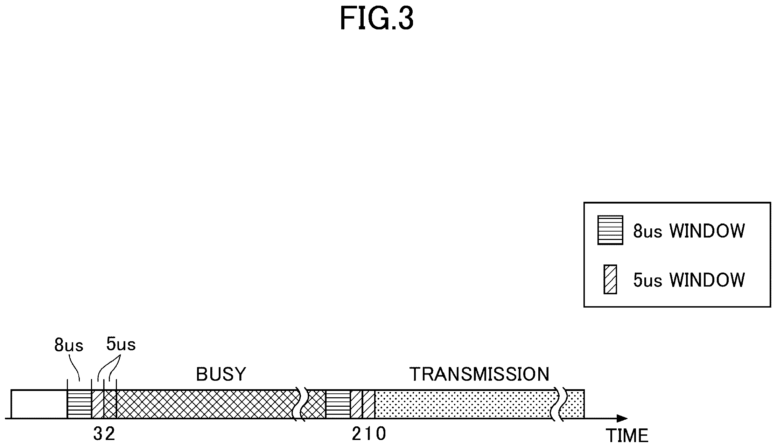

FIG. 3 is a drawing illustrating an example of LBT (Listen Before Talk). For example, in the frequency band from 52.6 GHz to 71 GHz, the CCA (Clear Channel Assessment) step has a duration of (8 microseconds + 5 microseconds x random counter) as the channel detection period, as shown in FIG. 3. FIG. 3 is an example in which the random counter is 3 in the first LBT, 8+5×3=23 microseconds are the channel detection period, and the channel busy is detected in the detection period from the 14th microsecond to the 18th microsecond. Also, in FIG. 3, the second LBT is started from the state in which the channel busy is detected in the first LBT and the random counter is 2, 8+5×2=18 microseconds are the channel detection period, and a transmission is started because the channel busy is not detected during the detection period.

In order to reduce the load required for PDCCH (Physical Downlink Control CHannel) monitoring in a newly operated frequency band that uses a higher frequency than that of the conventional frequency band, discussions are being performed to increase the periodicity of monitoring. On the other hand, in order to ensure the flexibility of scheduling, and to maintain the efficiency of the use of resources and communication speed even in a case where the periodicity of PDCCH monitoring is made longer, discussions are being performed to support scheduling of multiple PDSCHs (Physical Downlink Shared Channels) and multiple PUSCHs (Physical Uplink Shared Channels). However, for example, in a case where LBT is performed immediately before a transmission in an unlicensed band, there is a possibility of losing the transmission opportunity due to the LBT failure.

Accordingly, in the embodiment of the present invention, a DCI (Downlink Control Information) format for scheduling multiple PDSCHs or multiple PUSCHs properly is proposed. Also, in the embodiment of the present invention, TDRA (Time Domain Resource Allocation) to schedule multiple PDSCHs or multiple PUSCHs properly is proposed, and, furthermore, a DCI field apart from TDRA is proposed. Hereinafter, "PDSCH" may be replaced with "PUSCH", and "PUSCH" may be replaced with "PDSCH".

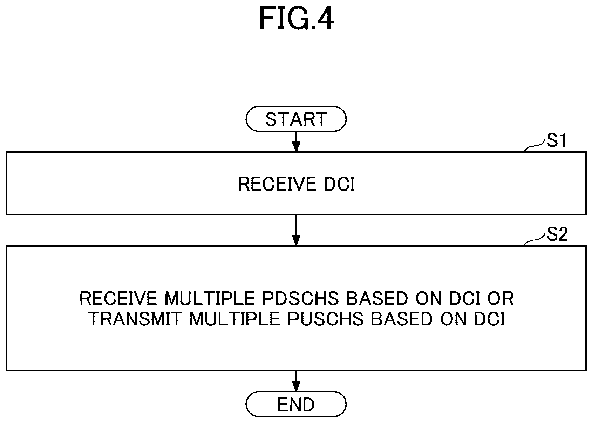

FIG. 4 is a flowchart illustrating an example of a receiving operation according to the embodiment of the present invention. In step S1, the terminal 20 receives DCI. In subsequent step S2, the terminal 20 receives multiple PDSCHs based on the DCI, or transmits multiple PUSCHs based on the DCI.

For example, DCI may schedule multiple PUSCH transmissions in contiguous slots. Also, DCI may indicate the TDRA field in the first slot or in each slot. The TDRA may correspond to multiple sets of the mapping type and SLIV (Start and Length Indicator Value), which enable multiple starting positions or multiple minislots in one slot.

For example, multiple PDSCHs or multiple PUSCHs in non-contiguous or contiguous slots may be scheduled by TDRA. Also, one TDRA field may indicate multiple starting positions or multiple minislots without making changes in the TDRA table. Also, multiple PDSCHs or multiple PUSCHs may be scheduled on a minislot basis or on a slot basis.

Also, the DCI format may be an enhancement of an existing UE-specific DCI format. For example, some or all of DCI format 1_0, DCI format 1_1, and DCI format 1_2 may be used to schedule multiple PDSCHs. For example, some or all of DCI format 0_0, DCI format 0_1, and DCI format 0_2 may be used to schedule multiple PUSCHs.

Also, with respect to the DCI format, a new format to perform multi-PDSCH scheduling and/or multi-PUSCH scheduling may be used. For example, the DCI may include fields for PDSCH and fields for PUSCH. Also, the DCI may include common fields that are applied to both PDSCH fields and PUSCH fields.

Also, in a case where PDSCH alone is scheduled, a field for PUSCH may indicate that PUSCH is not scheduled. For example, in a case where FDRA (Frequency Domain Resource Allocation) for PUSCH shows all "0s", this may indicate that PUSCH is not scheduled. Also, in a case where PUSCH alone is scheduled, a field for PDSCH may indicate that PDSCH is not scheduled. For example, in a case where FDRA for PDSCH shows all "0s", this may indicate that PUSCH is not scheduled.

Hereinafter, a scheduling method in which one TDRA index corresponds to one SLIV and a method for enabling non-contiguous scheduling, without enhancing the TDRA table, will be described.

DCI may schedule channels in multiple slots by using one TDRA index. One TDRA index may correspond to one mapping type and to SLIV of each entry in the TDRA table. Using one TDRA index that corresponds to one SLIV eliminates the need to enhance the TDRA table. Also, non-contiguous scheduling is enabled.

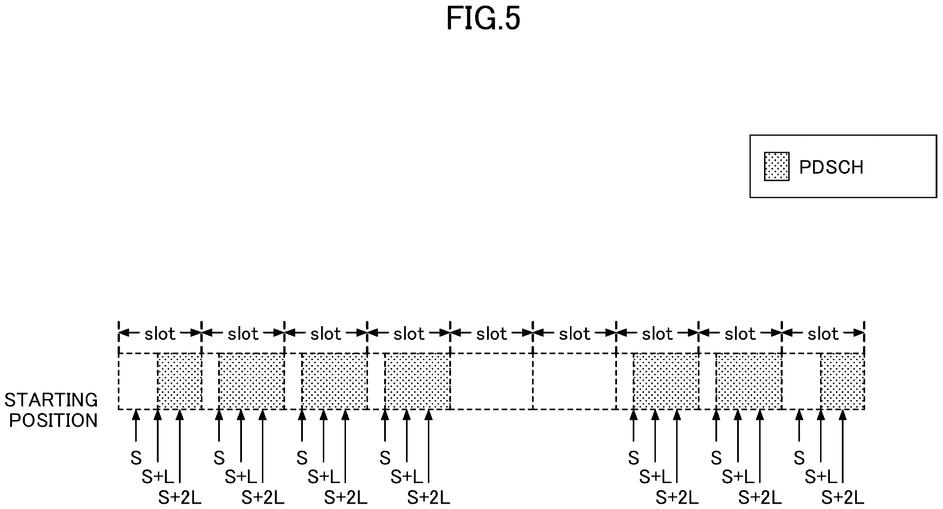

For example, the SLIV may indicate multiple starting positions in each scheduled slot. FIG. 5 is a drawing illustrating an example (1) of scheduling according to the embodiment of the present invention. As illustrated in FIG. 5, "S" indicates the first available starting position in the target slot. For example, in a case where LBT fails at a starting position "S" in one slot, the next available starting position is "S+L". That is, the operation of delaying the starting position S by L is repeated until LBT is successfully performed. That is, the starting position of PDSCH may be determined by the period that is obtained by adding an integer multiple of L to S. For example, in a case where the starting position immediately after LBT is successfully performed in one slot is "S1", the actual length of PDSCH or PUSCH in the slot is "13-S1" or "12-S1". For example, in a slot where LBT is not needed, the starting position may be "S". As shown in FIG. 5, in each scheduled slot, multiple starting positions can be specified based on one SLIV.

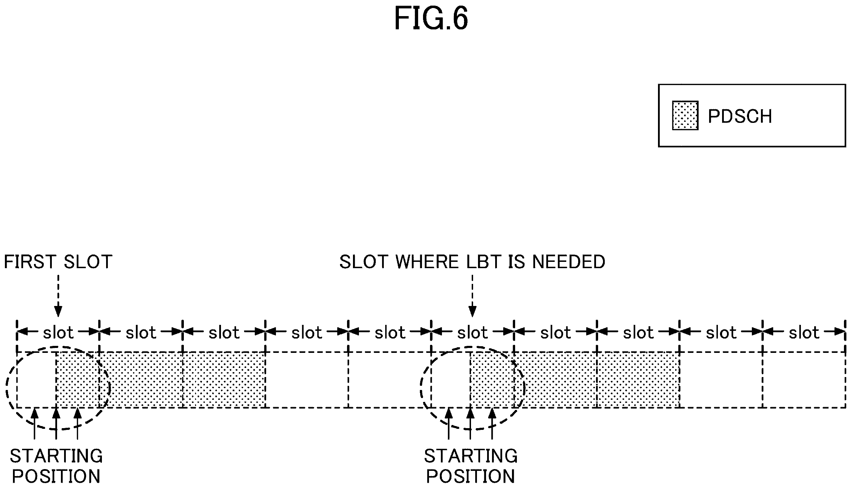

Also, for example, the SLIV may indicate multiple starting positions with respect to the first slot and slots where LBT is needed. FIG. 6 is a drawing illustrating an example (2) of scheduling according to the embodiment of the present invention. As illustrated in FIG. 6, in the first slot that is scheduled, and in a slot, apart from the first slot, where LBT to detect energy (energy detection) before transmitting the first symbol is needed, "S" indicates the first available starting position in the target slot. For example, in a case where LBT fails at the starting position "S", the next available starting position is "S+L". That is, the operation of delaying the starting position by L is repeated until LBT is successfully performed. For example, in a case where the starting position immediately after LBT is successfully performed in one slot is "S1", the actual length of PDSCH or PUSCH in the slot is "13-S1" or "12-S1".

Note that, apart from the first slot, a slot where LBT is needed to detect energy before transmitting the first symbol may be a slot that is scheduled later in the time domain by non-contiguous slot scheduling.

Also, in a case where the periodicity of PDCCH monitoring may be one or more slots, the PDSCH starting position may be changed according to the length of the monitoring periodicity. For example, in a case where the terminal 20 fails at PDCCH monitoring at the starting position "S", the next available starting position is "S+L". That is, the terminal 20 may repeat the operation of delaying the starting position by L until PDCCH monitoring is successful.

Apart from the first slot, in a slot where LBT to detect energy before transmitting the first symbol is not needed, the SLIV may be disregarded, and the first symbol in the slot may be made the starting symbol of PDSCH/PUSCH in the target slot, or L may be 13 or 14 symbols and PDSCH/PUSCH may be scheduled in all the available symbols in the slot. Note that, "PDSCH/PUSCH" may mean "PDSCH or PUSCH", or may mean "PDSCH and PUSCH".

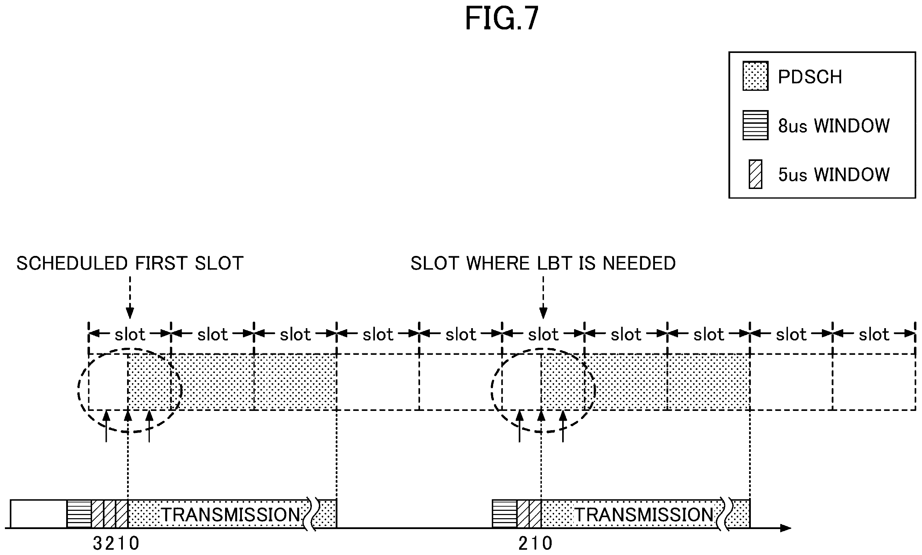

FIG. 7 is a drawing illustrating an example (3) of scheduling according to the embodiment of the present invention. As illustrated in FIG. 7, in the first slot that is scheduled, LBT is successfully performed in an 8-us window and three 5-us windows, so that, among the starting positions configured for multiple transmissions, a transmission may be started from the starting position immediately after the time when LBT is successfully performed. Also, as shown in FIG. 7, in a slot where LBT is needed, LBT is successfully performed in an 8-us window and two 5-us windows, so that, among the starting positions configured for multiple transmissions, a transmission may be started from the starting position immediately after the time when LBT is successfully performed.

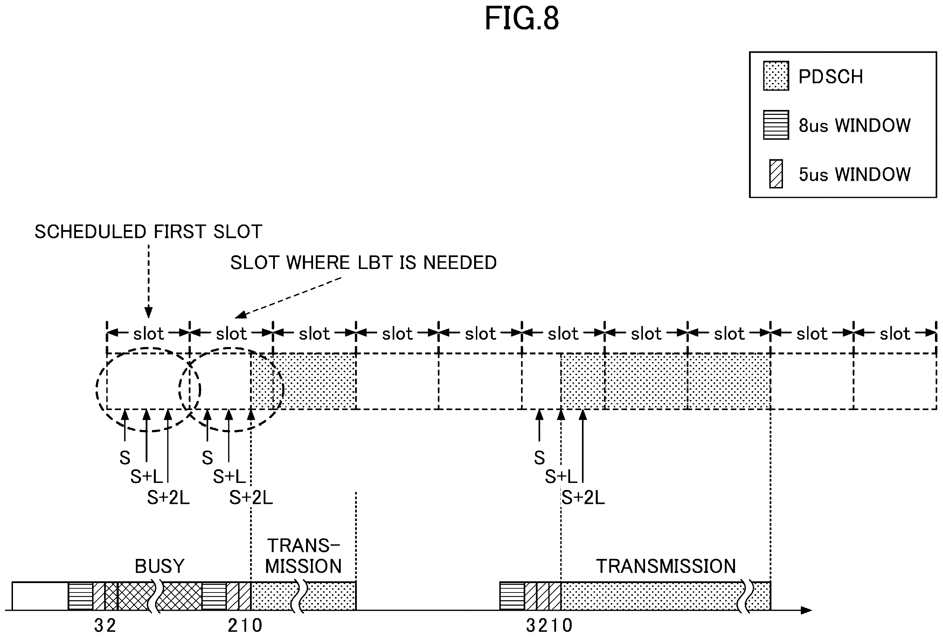

FIG. 8 is a drawing illustrating an example (4) of scheduling according to the embodiment of the present invention. As illustrated in FIG. 8, in the first slot that is scheduled, no transmission is performed because busy is detected according to an LBT. In the subsequent slot, LBT is successfully performed in an 8-us window and two 5-us windows, so that, among the starting positions configured for multiple transmissions, a transmission may be started from the starting position "S+2L", which is immediately after the time when LBT is successfully performed. Also, in the subsequent slot where LBT is needed, LBT is successfully performed in an 8-us window and three 5-us windows, so that, among the starting positions configured for multiple transmissions, a transmission may be started from the starting position "S+L", which is immediately after the time when LBT is successfully performed.

Also, DCI may schedule channels in multiple slots by indicating one TDRA index. That is, one TDRA index may correspond to one mapping type and to SLIV of each entry in the TDRA table.

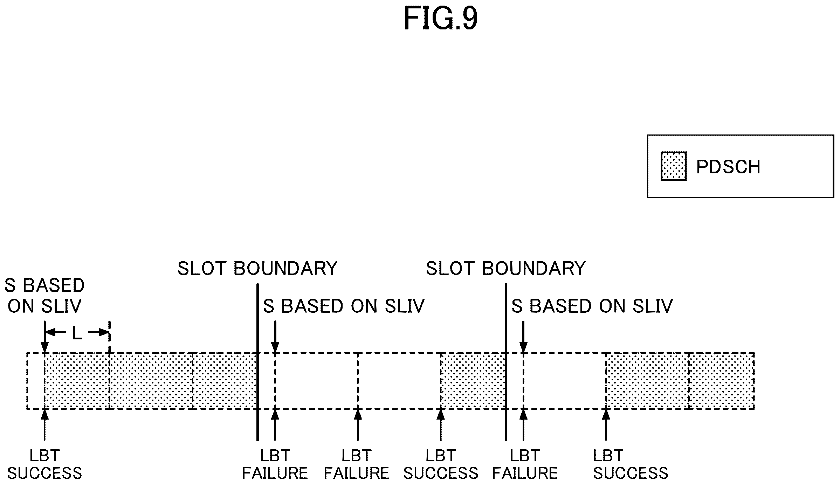

FIG. 9 is a drawing illustrating an example (5) of scheduling according to the embodiment of the present invention. As illustrated in FIG. 9, in each scheduled slot, the TDRA of PDSCHs/PUSCHs scheduled in multiple minislots is determined by an SLIV that is indicated, and the SLIV may be applied contiguously and repeatedly across the slots. For example, the TDRA of the PDSCH/PUSCH scheduled in the n-th minislot in one slot may be determined by assuming "Sn'=S+(n-1)*L" and "Ln'=L". Sn' is the starting position of the PDSCH/PUSCH scheduled in the n-th minislot, and Ln' is the length of the PDSCH/PUSCH scheduled in the n-th minislot.

Furthermore, for example, in a case where the TDRA does not cross the slot boundary, that is, in a case of Sn'+Ln'<14, Sn=Sn' and Ln=Ln' may be satisfied.

Furthermore, for example, in a case where the last TDRA crosses the slot boundary, that is, in a case of Sn'+Ln'>14, the length of the symbols before the slot boundary of the PDSCH/PUSCH scheduled in the last minislot may be shorter than L, and Sn=Sn' and Ln=Ln' may be satisfied.

Furthermore, for example, in a case where the last TDRA crosses the slot boundary, that is, in a case of Sn'+Ln'>14, the symbols before the slot boundary of the PDSCH/PUSCH scheduled in the last minislot may be concatenated with the immediately preceding TDRA, and "Sn-1=Sn-1', Ln=13-Sn-1'" may be satisfied.

Furthermore, for example, in a case where the last TDRA crosses the slot boundary, that is, in a case of Sn'+Ln'>14, the symbols before the slot boundary of the PDSCH/PUSCH scheduled in the last minislot may be dropped.

FIG. 9 shows an example in which the last TDRA crosses the slot boundary and is concatenated with the immediately preceding TDRA, and a transmission begins in a case where LBT is performed successfully. The scheduling method shown in FIG. 9 reduces the impact on the TDRA table and enables non-contiguous scheduling.

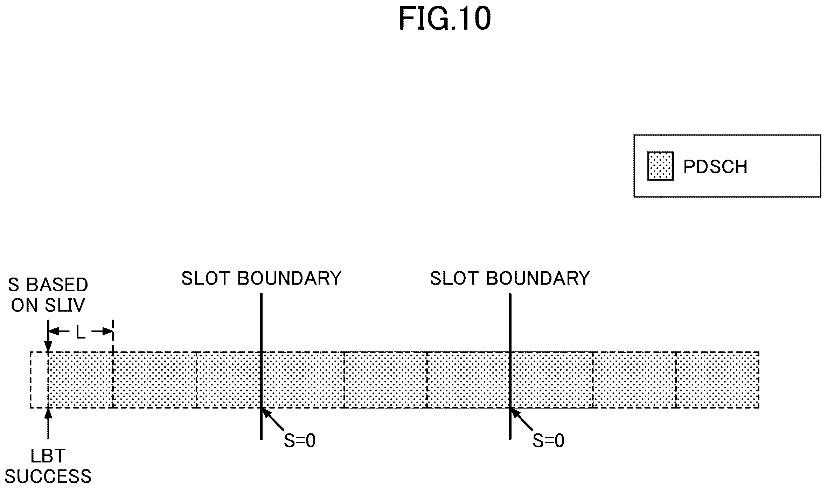

FIG. 10 is a drawing illustrating an example (6) of scheduling according to the embodiment of the present invention. As illustrated in FIG. 10, an SLIV may indicate multiple starting positions for the first slot and slots where LBT is needed. In the first slot that is scheduled, and slots, apart from the first slot, where LBT to detect energy before transmitting the first symbol is needed, the TDRA for the PDSCHs/PUSCHs of multiple minislots may be determined based on the SLIV indicated, as has been described with FIG. 9. Apart from the first slot, in slots where LBT to detect energy before transmitting the first symbol is not needed, the TDRA may be determined based on the SLIV, with S=0, as has been described with FIG. 9.

As shown in FIG. 10, after LBT is successfully performed, PDSCHs may be scheduled from S based on the SLIV, and, with S after the slot boundary set to 0, subsequent PDSCHs may be scheduled. The scheduling method shown in FIG. 10, reduces the impact on the TDRA table, reduces the DCI payload size, and enables non-contiguous scheduling.

Here, whether to perform slot-based scheduling or minislot-based scheduling may be determined based on one of the following (1) to (3) :
(1) Whether to perform slot-based scheduling or minislot-based scheduling may be specified in the technical specifications. For example, slot-based scheduling alone may be supported, minislot-based scheduling alone may be supported, or both slot-based scheduling and minislot-based scheduling may be supported.
(2) Whether to perform slot-based scheduling or minislot-based scheduling may be configured by RRC. For example, an information element included in PDSCH-Config or PUSCH-Config may indicate that only slot-based scheduling is supported, that only minislot-based scheduling is supported, or that both slot-based scheduling and minislot-based scheduling are supported.
(3) Whether to perform slot-based scheduling or minislot-based scheduling may be indicated by DCI. One bit included in scheduling DCI may indicate that only slot-based scheduling is supported, or that only minislot-based scheduling is supported. Alternatively, multiple bits included in the scheduling DCI may indicate that both slot-based scheduling and minislot-based scheduling are supported.

Here, whether to perform contiguous slot scheduling or non-contiguous slot scheduling may be determined based on one of the following (1) to (3):
(1) Whether to perform contiguous slot scheduling or non-contiguous slot scheduling may be configured by RRC. For example, whether to apply contiguous or non-contiguous slots to multi-PDSCH/PUSCH scheduling may be configured by RRC.
(2) Whether to perform contiguous slot scheduling or non-contiguous slot scheduling may be indicated by DCI. For example, one bit included in scheduling DCI may indicate whether contiguous or non-contiguous slots are applied to multi-PDSCH/PUSCH scheduling.
(3) Whether to perform contiguous slot scheduling or non-contiguous slot scheduling may be specified in the technical specifications. For example, whether contiguous or non-contiguous slots are applied to multi-PDSCH/PUSCH scheduling may be specified in the technical specifications in advance.

In (1) to (3) above, in a case where non-contiguous slot scheduling is configured, indicated, or specified, slot patterns that can be scheduled may be configured, indicated, or specified.

For example, a slot pattern may be mapped based on a sequence or repetition. For example, a slot pattern in which N1 slots are scheduled, followed by N2 slots not scheduled, followed by N1 slots scheduled, followed by N2 slots not scheduled, and so on, may be repeated until the number of slots to be scheduled is reached.

The values of N1 and N2 may be configured by RRC, or which values among the set of values specified in the technical specifications or RRC configuration are to be used may be indicated by DCI. DCI may indicate an index that shows one of a set of bitmaps specified in the technical specifications or RRC configuration. The bit field length of the index may be determined based on the set size. Also, DCI may directly indicate the bitmaps. The size of the bitmap-indicating field may be determined by the maximum number of slots to be scheduled.

Also, available scheduling slot patterns may be determined, for example, based on TDD patterns. For example, in a TDD pattern, slots containing D symbols or D and F symbols may be skipped when scheduling multiple PUSCHs. Also, for example, in a TDD pattern, slots containing U symbols or U and F symbols may be skipped when scheduling multiple PDSCHs.

Also, DCI may indicate one TDRA index including multiple sets of the mapping type and SLIV. Multiple SLIVs may correspond to a range that spans over multiple contiguous slots or multiple non-contiguous slots.

Multiple SLIVs may correspond to a range that spans over contiguous slots or non-contiguous slots. Whether the scheduling is contiguous or non-contiguous may be determined based on the indicated values of multiple SLIVs. Non-contiguous scheduling may be implemented by the configuration of the TDRA table.

Also, multiple SLIVs may correspond to a range that spans over contiguous slots. Scheduling of multiple non-contiguous PDSCHs/PUSCHs may be achieved by the number of gaps (for example, N1 slots), which is the number of non-scheduled slots after a scheduled slot, and the number of times to repeat the SLIV pattern (for example, N2 times). N1 and N2 may be determined as shown in following (1) to (5):
(1) The values of N1 and N2 may be encoded separately in different columns of the TDRA table.
(2) The values of N1 and N2 may be joint-encoded (like SLIV) in one column of the TDRA table.
(3) The value of N1 may be encoded in one column of the TDRA table, and the value of N2 may be determined by RRC configuration or may be indicated by scheduling DCI.
(4) The value of N2 may be encoded in one column of the TDRA table, and the value of N1 may be determined by RRC configuration or may be indicated by scheduling DCI.
(5) The values of N1 and N2 may be determined by RRC configuration or may be indicated by scheduling DCI.

Table 2 shown below shows an example of a TDRA table to which above (1) is applied:

**[Table 2]**

| Row index | K2 | SLIV | Mapping type | N 1 | N 2 |
|---|---|---|---|---|---|
| 1 | {2,3,4} | S={0,0,0} | {A,A,A} | 2 | 3 |
| | | L={14,14,14} | | | |
| 2 | { 1, 1, 1, 1, 2, 2, 2,2} | S={0,4,8,12,0,4 ,8,12} | {A,B,B,B,A,B,B , B} | 3 | 2 |
| | | L={4,4,4,2,4,4, 4,2} | | | |
| ....... | ...... | ...... | ...... | | |

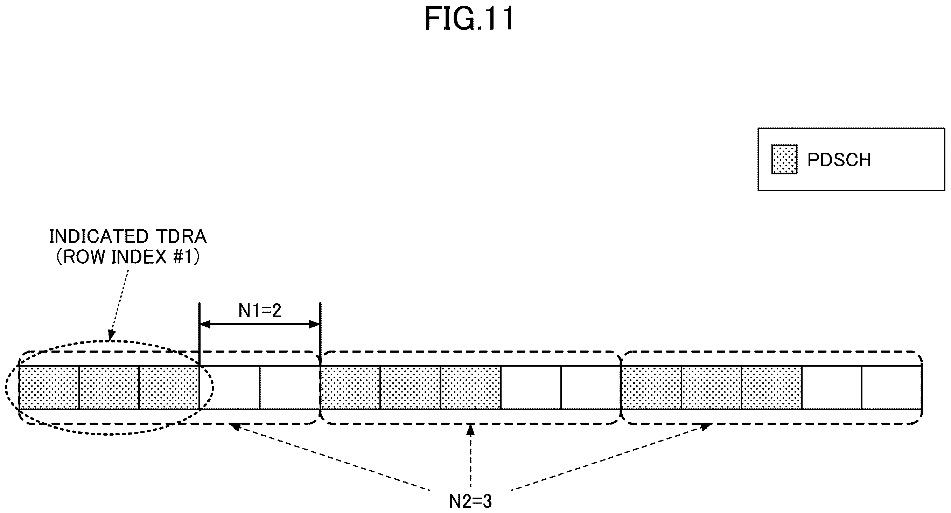

As shown in Table 2, N1 and N2 may be separated into different columns. FIG. 11 is a drawing illustrating an example (7) of scheduling according to the embodiment of the present invention. FIG. 11 is an example of scheduling according to index #1 in Table 2. As illustrated in FIG. 11, in accordance with the SLIV, 3 PDSCHs with starting position #0 and length 14 are scheduled, and these PDSCHs are not scheduled in the subsequent two slots because N1 is 2. Furthermore, because N2 is 3, the set of three slots in which PDSCHs are scheduled and two slots in which PDSCHs are not scheduled is repeated three times.

Also, multiple SLIVs may correspond to a range that spans over contiguous slots. Scheduling of multiple non-contiguous PDSCHs/PUSCHs may be achieved by a scheduling pattern that indicates which slot of the multiple SLIVs is not scheduled. The scheduling pattern may be specified in the technical specifications, may be configured by RRC, may be indicated by DCI, or may be applied as shown in (1) or (2) below:
(1) The scheduling pattern may be applied only once.
(2) The number of times the scheduling pattern is repeated (for example, N2 times) may be indicated.

Table 3 below shows an example of a TDRA table to which above (2) is applied.

**[Table 3]**

| Row index | K2 | SLIV | Mapping type |
|---|---|---|---|
| 1 | {2,3,4,5,6} | S={0,0,0,0,0} | {A,A,A,A,A} |
| | | L={14,14,14,14, 14} | |
| 2 | { 1, 1, 1, 1, 2, 2, 2,2} | S={0,4,8,12,0,4,8,12} | {A,B,B,B,A,B,B, B} |
| | | L={4,4,4,2,4,4, 4,2} | |
| ....... | ...... | ...... | ...... |

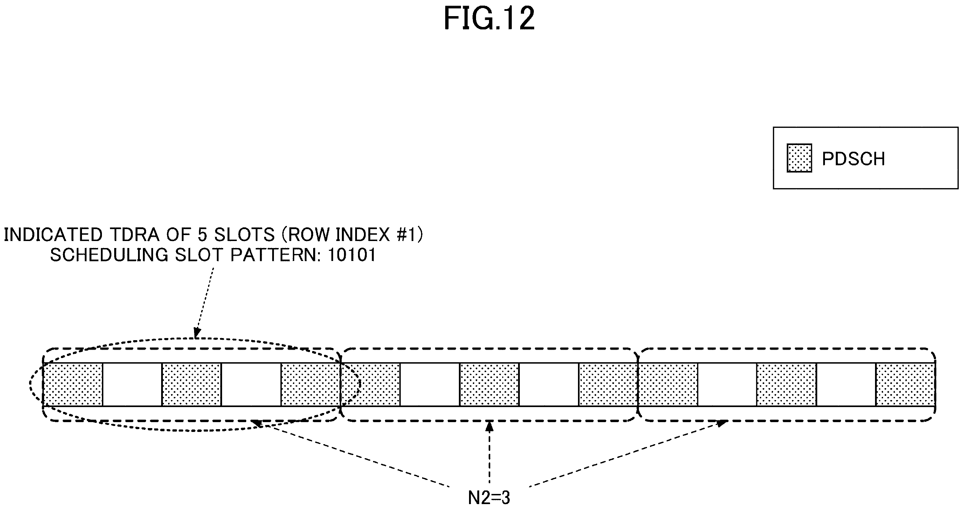

FIG. 12 is a drawing illustrating an example (8) of scheduling according to the embodiment of the present invention. FIG. 12 is a scheduling example corresponding to index #1 in Table 3. As illustrated in FIG. 12, the SLIV schedules 5 PDSCHs with starting position #0 and length 14, and "10101" is indicated as the scheduling pattern for the five slots. Note that, in the example of FIG. 12, the number of repetitions N2 is configured to be three (3). Note that N2 may be encoded in the TDRA table.

As shown in FIG. 12, the set of a slot in which a PDSCH is scheduled, a slot in which a PDSCH is not scheduled, a slot in which a PDSCH is scheduled, a slot in which a PDSCH is not scheduled, and a slot in which a PDSCH is scheduled is repeated three times based on the scheduling pattern.

Here, a common DCI field may be applied to single-PDSCH/PUSCH scheduling or multi-PDSCH/PUSCH scheduling as follows:

Common MCS/NDI/RV may be indicated between different schedulings. For example, one common MCS/NDI/RV field may be applied throughout all PDSCH/PUSCH schedulings. Note that the description of "MCS/NDI/RV" may be replaced by "MCS, NDI or RV", "MCS, NDI and RV", or any combination.

"MCS/NDI/RV" may be indicated in separate fields per scheduling. The number of MCS/NDI/RV fields may be equal to the maximum number of PDSCHs/PUSCHs that can be scheduled. Alternatively, MCS/NDI/RV may be indicated by using separate bits in one field for each scheduling. The length of the MCS/NDI/RV field may be N times the length of the field used in one scheduling of PDSCH/PUSCH. N may be equal to the maximum number of PDSCHs/PUSCHs that can be scheduled. The number of indication bits used in one PDSCH/PUSCH scheduling may be less than or equal to the length of the MCS/NDI/RV field according to the conventional technology.

In a case where a common MCS indication is employed, the same MCS table may be used, or different MCS tables may be used. In a case where different MCS tables are used, which MCS table is to be applied may be indicated by a bit included in another field in the DCI that schedules PDSCH/PUSCH. In a case where the bit is 1, a low-SE (Spectral Efficiency) MCS table may be applied to the scheduled PDSCH/PUSCH. In a case where the bit is not 1, another configured MCS table may be used. Another field mentioned above may be an existing DCI field, and in a case where a separate indication is employed, the field may be, for example, a field to indicate priority. Also, another field mentioned above may be a new DCI field, and, for example, may have a field length that is equal to the maximum number of PDSCHs/PUSCHs that can be scheduled.

In a case of scheduling multiple PDSCHs, only one transport block (TB) may be allowed per PDSCH in a case where maxNrofCodewordsScheduledByDCI is 2. For example, in a case where a separate indication is employed, only the field for TB1 needs to be enhanced. Also, in a case where maxNrofCodewordsScheduledByDCI is 2, 2 TBs per PDSCH may be allowed, similar to the case with a single PDSCH. For example, in a case where a separate indication is employed, the fields for TB1 and TB2 need to be enhanced.

Common FDRA may be indicated for different schedulings. For example, one common FDRA field may be applied throughout all PDSCH/PUSCH schedulings. Also, FDRA may be indicated in separate fields for each scheduling. The number of FDRA fields may be equal to the maximum number of PDSCHs/PUSCHs that can be scheduled. Alternatively, FDRA may be indicated using separate bits in one field for each scheduling. The length of the FDRA field may be N times the length of the field used in one PDSCH/PUSCH scheduling. N may be equal to the maximum number of PDSCHs/PUSCHs that can be scheduled. The number of indication bits used in one PDSCH/PUSCH scheduling may be less than or equal to the length of the FDRA field according to the conventional technology.

Similar to FDRA, a common priority indicator may be indicated for all PDSCH/PUSCH schedulings or a separate priority indicator may be indicated for each PDSCH/PUSCH scheduling.

Regarding the HARQ process ID, the HPN field indicates the HARQ process ID corresponding to the first PDSCH/PUSCH, and the HAQ process IDs of subsequent PDSCHs/PUSCHs may be incremented one by one.

Also, the HPN may be indicated in separate fields for each scheduling. The number of HPN fields may be equal to the maximum number of PDSCHs/PUSCHs that can be scheduled. Alternatively, the HPN may be indicated in separate bits in one field for each scheduling. The length of the HPN field may be N times the length of the field used in one PDSCH/PUSCH scheduling. N may be equal to the maximum number of PDSCHs/PUSCHs that can be scheduled. The number of indication bits used in one PDSCH/PUSCH scheduling may be less than or equal to the length of the HPN field according to the conventional technology.

Regarding the information related to CBG (Code Block Group) transmission and information indicating completion of CBG, in a case of multi-PDSCH/PUSCH transmission, CBG-based transmission need not be assumed. That is, in a case of multi-PDSCH/PUSCH transmission, the corresponding field may be 0 bits. Also, the separate indication may be performed for each TB for each scheduled PDSCH/PUSCH, and, for example, the bit length of the fields or the number of fields may be determined based on the maximum number of PDSCHs/PUSCHs that can be scheduled.

A TCI (Transmission Configuration Indication) for multi-PDSCH scheduling or an SRI (SRS-ResourceIndex) for multi-PUSCH scheduling may be indicated in common for different schedulings. For example, one common FDRA field may be applied throughout all PDSCH/PUSCH schedulings. Also, the TCI/SRI may be indicated by separate fields in each scheduling. The number of TCI/SRI fields may be equal to the maximum number of PDSCHs/PUSCHs that can be scheduled. Alternatively, the TCI/SRI may be indicated using separate bits in one field for each scheduling. The length of the TCI/SRI field may be N times the length of the field used in one scheduling of PDSCH/PUSCH. N may be equal to the maximum number of PDSCHs/PUSCHs that can be scheduled. The number of indication bits used for one PDSCH/PUSCH scheduling may be less than or equal to the length of the TCI/SRI field according to the conventional technology. The number of bits of the TCI/SRI field may be aligned with the number of beams included in one subset. The subset may correspond to the beams available in the COT (Channel Occupancy Time) in unlicensed band operation. Note that "TCI/SRI" may mean "TCI and SRI" or may mean "TCI or SRI".

A predetermined number of TCIs/SRIs may be indicated, and mapping may be performed between the scheduled PDSCHs and the TCIs/SRIs as follows.

For example, the mapping may be performed based on the slot-based repetition. For example, two TCI states may be indicated, with the first TCI applied to the first slot and the second TCI applied to the following slot; this may be repeated in subsequent slots. Also, the mapping may be performed based on the PDSCH/PUSCH-based repetition. For example, two TCI states may be indicated, with the first TCI applied to the first PDSCH and the second TCI applied to the following PDSCH; this may be repeated in subsequent PDSCHs.

Also, for example, the mapping may be performed based on the slot-based sequence. For example, the TCI state may be associated with which slot the PDSCH is scheduled in, and the association between the slot and the TCI state may be configured by RRC. For example, two TCI states may be indicated, with the first TCI state associated with the first two slots by RRC configuration and the second TCI state associated with the following two slots; the subsequent slots may be associated with the TCI states in the same way. Also, the mapping may be performed based on the PDSCH/PUSCH-based sequence. For example, TCI states may be associated with the indices of target PDSCHs among all the PDSCHs that are scheduled, and the association between the PDSCH indices and TCI states may be configured by RRC. For example, two TCI states may be indicated, with the first TCI state associated with the first PDSCH and the second TCI state associated with the following PDSCH by RRC configuration; the subsequent PDSCHs may be associated with the TCI states in the same way.

The number of TCI/SRI states may be specified in the technical specifications or may be configured by RRC.

TPMI (Transmitted Precoding Matrix Indicator) and RI (Rank Indicator) related to multi-PUSCH scheduling may be indicated in the same manner as the above SRI. Which of the above SRI indication methods is used may be determined independently from the SRI. Also, the method of indicating the TPMI and the RI may depend on the method of indicating the SRI. For example, in a case where a common SRI is indicated for all the PDSCHs that are scheduled, common TPMI and RI may be indicated, or separate TPMIs and RIs may be indicated. For example, in a case where separate SRIs are indicated for PDSCHs that are scheduled, separate TPMIs and RIs may be indicated. When multiple SRI states are mapped to scheduled PDSCHs, the corresponding TPMI and RI for each SRI state may be indicated.

With respect to the TPC (Transmit Power Control) command field related to multi-PUSCH scheduling, which of the above SRI indication methods is to be used may be determined independently from the SRI. Also, the method of indicating TPC commands may depend on the method of indicating the SRI. For example, in a case where a common SRI is indicated for all of the PDSCHs scheduled, a common TPC command or separate TPC commands may be indicated. For example, in a case where separate SRIs are indicated for each scheduled PDSCH, separate TPC commands may be indicated. When multiple SRI states are mapped to scheduled PDSCHs, the corresponding TPC command may be indicated for each SRI state.

The PUSCH transmit power control of the terminal 20 based on TPC commands may operate as follows.

In a case where the terminal 20 is not configured with tpc-Accumulation, one common TPC command may be indicated to each PUSCH, and the TPC command may be applied only once to the first PUSCH. Also, separate TPC commands may be indicated for each PUSCH, and these TPC commands may be applied to corresponding PUSCHs. For example, in a case where no power adjustment is performed between two PUSCHs, the TPC command value "0" may be indicated for the latter PUSCH. Also, in a case where mapping of multiple TPC commands is indicated, in each set of PUSCHs in the same power control state, the corresponding TPC command values may be applied only to the first PUSCH in each set.

In a case where the terminal 20 is configured with tpc-Accumulation, the indicated TPC command value may be applied to each corresponding PUSCH.

Note that, which operation of the above embodiments is executable may be configured by higher layer parameters, may be reported by the terminal 20 as UE capabilities, may be specified in the technical specifications, or may be determined by the higher layer parameter configuration and UE capabilities.

Note that a UE capability to indicate whether or not the terminal 20 supports single DCI-based multi-PDSCH or multi-PUSCH scheduling based on the existing UE-specific DCI formats may be defined.

Note that a UE capability to indicate whether or not the terminal 20 supports single DCI-based multi-PDSCH or multi-PUSCH scheduling based on the new UE-specific DCI formats may be defined.

According to the above embodiment, the base station 10 can efficiently schedule multiple PDSCHs/PUSCHs by assuming the use of LBT.

That is, it is possible to apply scheduling that is suitable for the communication scheme in a wireless communication system.

### (Device Structure)

Next, example functional structures of the base station 10 and the terminal 20 that perform the processes and operations described so far will be described. The base station 10 and the terminal 20 have the functions to implement the embodiment described above. However, each of the base station 10 and the terminal 20 may have only part of the functions in the embodiment.

### <Base station 10>

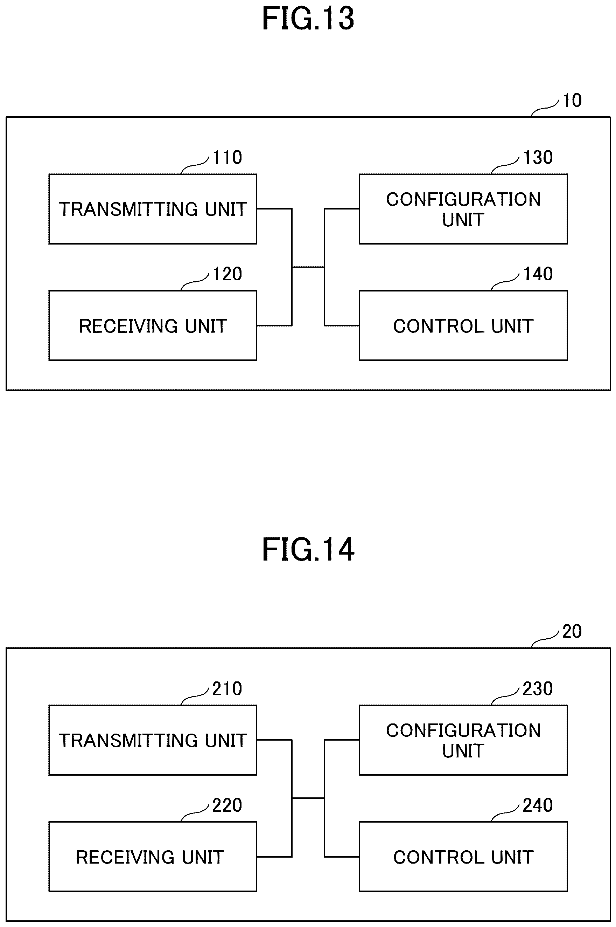

FIG. 13 is a drawing illustrating an example functional structure of the base station 10 according to the embodiment of the present invention. Referring to FIG. 13, the base station 10 has a transmitting unit 110, a receiving unit 120, a configuration unit 130, and a control unit 140. The functional structure shown in FIG. 13 is only an example. A functional category and the name of the functional unit may be any category or name insofar as the functional unit can perform the operations according to the embodiment of the present invention.

The transmitting unit 110 includes a function for generating a signal to be transmitted to the terminal 20 side and transmitting the signal wirelessly. Also, the transmitting unit 110 transmits inter-network-node messages to other network nodes. The receiving unit 120 includes functions for receiving various signals transmitted from the terminal 20 and obtaining, for example, higher layer information from the received signals. Also, the transmitting unit 110 has a function for transmitting NR-PSS, NR-SSS, NR-PBCH, DL/UL control signals, and so forth, to the terminal 20. Also, the receiving unit 120 receives inter-network-node messages from other network nodes.

The configuration unit 130 stores preconfigured configuration information and various configuration information to be transmitted to the terminal 20. The content of the configuration information is, for example, information related to measurement settings.

The control unit 140 controls the measurement settings as described in the embodiment. Also, the control unit 140 performs scheduling. The functional unit for signal transmission in the control unit 140 may be included in the transmitting unit 110, and the functional unit for signal reception in the control unit 140 may be included in the receiving unit 120.

### <Terminal 20>

FIG. 14 is a drawing illustrating an example functional structure of the terminal 20 according to the embodiment of the present invention. As shown in FIG. 14, the terminal 20 has a transmitting unit 210, a receiving unit 220, a configuration unit 230, and a control unit 240. The functional structure shown in FIG. 14 is simply an example. A functional category and the name of the functional unit may be any category or name insofar as the functional unit can perform the operations according to the embodiment of the present invention.

The transmitting unit 210 includes a function for generating a signal to be transmitted from transmission data, and transmitting the signal wirelessly. The receiving unit 220 includes functions for receiving various signals wirelessly and obtaining, for example, higher layer information from the received physical layer signals. Also, the receiving unit 220 has a function for receiving NR-PSS, NR-SSS, NR-PBCH, DL/UL/SL control signals, and so forth, transmitted from the base station 10. Also, for example, in D2D communication, the transmitting unit 210 transmits PSCCH (Physical Sidelink Control CHannel), PSSCH (Physical Sidelink Shared CHannel), PSDCH (Physical Sidelink Discovery CHannel), PSBCH (Physical Sidelink Broadcast CHannel), and so forth, to other terminals 20, and the receiving unit 220 receives PSCCH, PSSCH, PSDCH or PSBCH, and so forth, from other terminals 20.

The configuration unit 230 stores various configuration information received from the base station 10 by the receiving unit 220. Also, the configuration unit 230 also stores configuration information that is provided in advance. The content of the configuration information is, for example, information related to measurement settings.

The control unit 240 controls the measurement settings as described in the embodiment. The functional unit for signal transmission in the control unit 240 may be included in the transmitting unit 210, and the functional unit for signal reception in the control unit 240 may be included in the receiving unit 220.

### (Hardware structure)

The block diagrams (FIG. 13 and FIG. 14) used in the description of the above embodiment illustrate blocks of functional units. These functional blocks (components) are implemented by any combination of hardware and/or software. In addition, the method of implementing each functional block is not particularly limited. That is, each functional block may be implemented by using a single device that is physically or logically combined, or two or more devices that are physically or logically separated may be directly or indirectly connected (for example, by using a cable, radio, etc.) and each functional block may be implemented using these multiple devices. The functional blocks may be implemented by combining software with the device or devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmitter. In either case, as described above, the implementation method is not particularly limited.

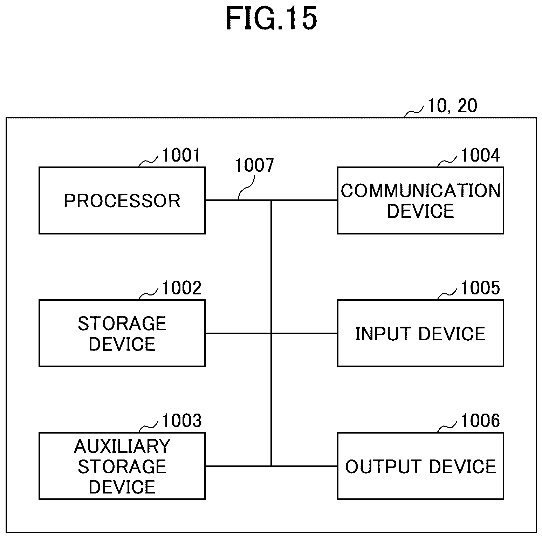

For example, the base station 10, the terminal 20, or the like in an embodiment of the present disclosure may function as a computer for performing a process of the radio communication method according to the present disclosure. FIG. 15 is a diagram illustrating an example of a hardware structure of the base station 10 and the terminal 20 according to an embodiment of the present disclosure. Each of the base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, device, unit, or the like. The hardware structure of each of the base station 10 and the terminal 20 may be configured to include each device depicted, or may be configured without including some devices.

Each function in each of the base station 10 and the terminal 20 is implemented such that predetermined software (program) is read on hardware, such as the processor 1001, the storage device 1002, and the like, and the processor 1001 performs an operation and controls communication by the communication device 1004 and at least one of reading and writing of data in the storage device 1002 and the auxiliary storage device 1003.

For example, the processor 1001 operates an operating system and controls the entire computer. The processor 1001 may be configured with a Central Processing Unit (CPU) including an interface with a peripheral device, a control device, an operation device, a register, and the like. For example, the above-described control unit 140, the control unit 240, and the like may be implemented by the processor 1001.

Furthermore, the processor 1001 reads a program (program code), a software module, data, or the like from at least one of the auxiliary storage device 1003 and the communication device 1004 out to the storage device 1002, and executes various types of processes according to them. A program causing a computer to execute at least some of the operations described in the above embodiment is used as the program. For example, the control unit 140 of the base station 10 illustrated in FIG. 13 may be implemented by a control program which is stored in the storage device 1002 and operates on the processor 1001. Furthermore, for example, the control unit 240 of the terminal 20 illustrated in FIG. 14 may be implemented by a control program which is stored in the storage device 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and may be configured with, for example, at least one of a Read Only Memory (ROM), an Erasable Programmable ROM (EPROM), an Electrically Erasable Programmable ROM (EEPROM), a Random Access Memory (RAM), and the like. The storage device 1002 may also be referred to as a "register", a "cache", a "main memory", or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a Compact Disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The above-described storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as, for example, a "network device", a "network controller", a "network card", a "communication module", or the like. The communication device 1004 may be configured to include a high frequency switch, a duplexer, a filter, a frequency synthesizer, and the like to implement at least one of frequency division duplex (FDD: Frequency Division Duplex) and time division duplex (TDD: Time Division Duplex). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device configured to receive an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally formed (such as a touch panel).

The devices, such as the processor 1001 and the storage device 1002, are connected by the bus 1007 for communicating information. The bus 1007 may be configured with a single bus or may be configured with different buses between the devices.

Furthermore, each of the base station 10 and the terminal 20 may be configured to include hardware, such as a microprocessor, a digital signal processor (DSP: Digital Signal Processor), an Application Specific Integrated Circuit (ASIC), a Programmable Logic Device (PLD), or a Field Programmable Gate Array (FPGA), or all or some of the functional blocks may be implemented by the hardware. For example, the processor 1001 may be implemented by at least one of these hardware components.

### (Summary of Embodiment)

As described above, according to the embodiment of the present invention, a terminal is provided. The terminal has: a receiving unit configured to receive a downlink control channel and a plurality of downlink shared channels that are scheduled; and a control unit configured to assume, when receiving the downlink shared channels, a plurality of starting positions of the downlink shared channels in a time domain, in slots in which LBT (Listen Before Talk) is needed or in slots in which a periodicity of monitoring of the downlink control channel can be one slot or longer, among the slots in which the plurality of downlink shared channels are scheduled.

According to the above configuration, the base station 10 can efficiently schedule multiple PDSCHs/PUSCHs that assume the use of LBT. That is, it is possible to apply scheduling that is suitable to the communication scheme in a wireless communication system.

When receiving the downlink shared channels, the control unit may assume the plurality of starting positions of the downlink shared channels in the time domain in the first slot among the slots in which the plurality of downlink shared channels are scheduled. According to the above configuration, the base station 10 can efficiently schedule multiple PDSCHs/PUSCHs that assume the use of LBT.

The plurality of starting positions may be determined by adding an integer multiple of a predetermined length L to one starting position S. According to the above configuration, the base station 10 can efficiently schedule multiple PDSCHs/PUSCHs that assume the use of LBT.

When receiving the downlink shared channels, in slots other than the first slot and the slots in which LBT is needed, among the slots in which the plurality of downlink shared channels are scheduled, the control unit may assume the starting positions of the downlink shared channels in the time domain are at a top of a slot. According to the above configuration, the base station 10 can efficiently schedule multiple PDSCHs/PUSCHs that assume the use of LBT.

Also, according to an embodiment of the present invention, a terminal is provided. The terminal has: a receiving unit configured to receive a downlink control channel; a transmitting unit configured to transmit a plurality of uplink shared channels that are scheduled; and a control unit configured to assume, when transmitting the uplink shared channels, a plurality of starting positions of the uplink shared channels in the time domain, in slots in which LBT (Listen Before Talk) is needed or in slots in which the periodicity of monitoring of the downlink control channel can be one slot or longer, among the slots in which the plurality of uplink shared channels are scheduled.

According to the above configuration, the base station 10 can efficiently schedule multiple PDSCHs/PUSCHs that assume the use of LBT. That is, it is possible to apply scheduling that is suitable to the communication scheme in a wireless communication system.

Also, according to the embodiment of the present invention, a base station is provided. The base station has: a transmitting unit configured to transmit a downlink control channel and a plurality of downlink shared channels that are scheduled; and a control unit configured to assume, when transmitting the downlink shared channels, a plurality of starting positions of the downlink shared channel in the time domain, in slots in which LBT (Listen Before Talk) is needed or in slots in which the periodicity of monitoring of the downlink control channel can be one slot or longer, among the slots in which the plurality of downlink shared channels are scheduled.

According to the above configuration, the base station 10 can efficiently schedule multiple PDSCHs/PUSCHs that assume the use of LBT. That is, it is possible to apply scheduling that is suitable to the communication scheme in a wireless communication system.

Also, according to the embodiment of the present invention, a communication method to be performed by a terminal is provided. The communication method includes: receiving a downlink control channel and a plurality of downlink shared channels that are scheduled; and when receiving the downlink shared channels, assuming a plurality of starting positions of the downlink shared channels in the time domain, in slots in which LBT (Listen Before Talk) is needed or in slots in which the periodicity of monitoring of the downlink control channel can be one slot or longer, among the slots in which the plurality of downlink shared channels are scheduled.

According to the above configuration, the base station 10 can efficiently schedule multiple PDSCHs/PUSCHs that assume the use of LBT. That is, it is possible to apply scheduling that is suitable to the communication scheme in a wireless communication system.

### (Notes on embodiment)

An example embodiment of the present invention has been described above, but the disclosed invention is not limited to the above embodiment, and those skilled in the art would understand that there may be various modified examples, revised examples, alternative examples, substitution examples, and the like. In order to facilitate understanding of the invention, specific numerical values have been used for description, but the numerical values are merely examples, and any suitable values may be used unless otherwise specified. The classification of items in the above description is not essential to the present invention. Matters described as two or more items may be combined if necessary, and a matter described as one item may be applied to another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiment, the order of the processes may be changed as long as there is no contradiction. For the sake of convenience of processing description, the base station 10 and the terminal 20 are described using functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a RAM (Random Access Memory), a flash memory, a ROM (Read-Only Memory), an EPROM, an EEPROM, a register, an HDD (Hard Disk Drive), a removable disk, a CD-ROM, a database, a server, or any other appropriate storage medium.

Furthermore, notification of information is not limited to the aspect or embodiment described in the present disclosure and may be provided by using any other method. For example, the notification of information may be provided by physical layer signaling (for example, DCI ( Downlink Control Information) or UCI (Uplink Control Information) higher layer signaling (for example, RRC (Radio Resource Control) signaling, MAC (Medium Access Control) signaling, broadcast information (MIB (Master Information Block), SIB (System Information Block), etc.), other signals, or a combination thereof. Furthermore, RRC signaling may be referred to as an RRC message and may be, for example, an RRC connection setup message, an RRC connection reconfiguration message, or the like.

Each aspect and embodiment described in the present disclosure may be applied to at least one of LTE (Long Term Evolution), LTE-A (LTE-Advanced), SUPER 3G, IMT-Advanced, 4G (4th Generation mobile communication system), 5G (5th Generation mobile communication system), FRA (Future Radio Access), NR (New Radio), W-CDMA (registered trademark), GSM (registered trademark), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), a system using any other appropriate system, and next generation systems extended based on these standards. Furthermore, a plurality of systems (for example, a combination of at least one of LTE and LTE-A with 5G) may be combined to be applied.

The order of the processing procedures, the order of the sequences, the order of the flowcharts, and the like of the respective aspects/embodiments described in this specification may be changed, provided that there is no contradiction. For example, the method described in the present disclosure presents elements of various steps with an example order and is not limited to the presented, specific order.

In this specification, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case has been shown above in which there is one network node other than the base station 10. The one network node may be a combination of a plurality of other network nodes (for example, MME and S-GW).

Information, a signal, or the like described in the present disclosure may be output from a higher layer (or from a lower layer) to a lower layer (or to a higher layer). Information, a signal, or the like described in the present disclosure may be input and output via a plurality of network nodes.

Input and output information and the like may be stored in a specific place (for example, a memory), or may be managed by using a management table. Input and output information and the like may be overwritten, updated, or additionally written. Output information and the like may be deleted. Input information and the like may be transmitted to other devices.

The determination in the present disclosure may be made in accordance with a value (0 or 1) represented by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like, regardless of whether software is called software, firmware, middleware, a microcode, a hardware description language, or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a DSL (Digital Subscriber Line)) and a radio technology (such as infrared rays or a microwave), at least one of these wired technology and radio technology is included in a definition of a transmission medium.

Information, signals, and the like described in the present disclosure may be expressed using any one of a variety of different techniques. For example, data, instructions, commands, information, signals, bits, symbols, chips, and the like which are mentioned throughout the above description may be expressed by voltages, currents, electromagnetic waves, magnetic fields or magnetic particles, optical fields or photons, or any combination thereof.

The terms described in the present disclosure and the terms necessary for understanding the present disclosure may be replaced with terms having the same or similar meanings. For example, at least one of a channel and a symbol may be a signal (signaling). Furthermore, a signal may be a message. Furthermore, a component carrier (CC: Component Carrier) may be referred to as a "carrier frequency", a "cell", a "frequency carrier", or the like.

The terms "system" and "network" used in the present disclosure are interchangeable.

Furthermore, the information, parameters, and the like described in the present disclosure may be expressed by using absolute values, may be expressed by using relative values from predetermined values, or may be expressed by using any other corresponding information. For example, the radio resources may be those indicated by indices.

The names used for the above-described parameters are not limited names in any point of view. Furthermore, mathematical formulas or the like using the parameters may be different from those explicitly disclosed in the present disclosure. Since various channels (for example, PUSCH, PUCCH, PDCCH, etc.) and information elements can be identified by any suitable names, various names assigned to the various channels and the information elements are not limited names in any point of view.

In the present disclosure, the terms "base station (BS: Base Station)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to by a term such as a macrocell, a small cell, a femtocell, and a picocell.

The base station can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, the terms "mobile station (MS: Mobile Station)", "user terminal", "user equipment (UE)", "terminal", and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be also referred to as a transmission device, a receiving device, a communication device, or the like. At least one of the base station and the mobile station may be a device installed in a mobile body, a mobile body itself, or the like. The mobile body may be a vehicle (for example, a car, an airplane, etc.), an unmanned body that moves (for example, a drone, an autonomous car or the like), or a robot (manned type or unmanned type). At least one of the base station and the mobile station includes a device that need not move during communication operation. For example, at least one of the base station and the mobile station may be an Internet of Things (IoT) device such as a sensor.

Furthermore, the base station in the present disclosure may be replaced by the user terminal. For example, various aspects/embodiments of the present disclosure may be applied to a structure in which communication between the base station and the user terminal is replaced by communication between multiple terminals 20 (such communication may be referred to as D2D (Device-to-Device), V2X (Vehicle-to-Everything), etc.). In this case, the terminals 20 may have and perform the functions the base station 10 described above has. The phrases "uplink" and "downlink" may also be replaced by phrases corresponding to terminal-to-terminal communication (for example, "side"). For example, an uplink channel, a downlink channel, or the like may be replaced by a side channel.

Similarly, the user terminal in the present disclosure may be replaced with the base station. In this case, the base station may have the functions of the above-described user terminal.

The terms "determination (determining)" and "decision (determining)" used in the present specification may include various types of operations. The "determination" and "decision" may include deeming "judging", "calculating", "computing", "processing", "deriving", "investigating", "looking up" (search, inquiry) (for example, searching in a table, a database, or another data structure)", "searching", "inquiring", or "ascertaining" as "determining" and/or "deciding". Furthermore, the "determination" and "decision" may include deeming "receiving (for example, receiving information)", "transmitting (for example, transmitting information)", "inputting", "outputting", or "accessing (for example, accessing data in a memory)" as "determining" and/or "deciding". Furthermore, the "determination" and "decision" may include deeming "resolving", "selecting", "choosing", "establishing", or "comparing" as "determining" and/or "deciding". Namely, the "determination" and "decision" may include deeming an operation as "determining" and/or "deciding". Furthermore, "determining" may be replaced with "assuming", "expecting", "considering", or the like.

The terms "connected", "coupled", or variations thereof may mean any direct or indirect connection or coupling between two or more elements and may include the presence of one or more intermediate elements between two elements which are "connected" or "coupled". The coupling or the connection between the elements may be physical, logical, or a combination thereof. For example, "connection" may be replaced with "access". In a case of using in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS (Reference Signal) and may be referred to as a pilot, depending on the standard that is applied.

The phrase "based on" used in the present disclosure is not limited to "based only on" unless otherwise stated. In other words, the phrase "based on" means both "based only on" and "based at least on".

Any reference to an element using a designation such as "first" or "second", used in the present disclosure, does not generally restrict quantities or the order of those elements. Such designation can be used in the present disclosure as a convenient method of distinguishing between two or more elements. Thus, reference to the first and second elements does not mean that only two elements can be adopted there, or the first element must precede the second element in a certain way.

Furthermore, "means" in the structure of each of the above devices may be replaced with "unit", "circuit", "device", or the like.

When "include", "including", and variations thereof are used in the present disclosure, these terms are intended to be comprehensive, similar to the term "provided with (comprising)". Furthermore, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

Numerology may be a communication parameter applied to at least one of transmission and reception of a certain signal or channel. For example, numerology may indicate at least one of subcarrier spacing (SCS: SubCarrier Spacing), the bandwidth, the symbol length, the cyclic prefix length, the transmission time interval (TTI: Transmission Time Interval), the number of symbols per TTI, the radio frame configuration, a specific filtering process performed in the frequency domain by a transceiver, a specific windowing process performed in the time domain by a transceiver, and the like.

A slot may include one or more symbols (OFDM (Orthogonal Frequency Division Multiplexing) symbols, SC-FDMA (Single Carrier Frequency Division Multiple Access) symbols, etc.) in the time domain. A slot may be a time unit based on numerology.

A slot may include a plurality of mini slots. Each mini slot may include one or more symbols in the time domain. Furthermore, a mini slot may be referred to as a sub-slot. A mini slot may include fewer symbols than a slot. PDSCH (or PUSCH) that is transmitted in a unit of time greater than a mini slot may be referred to as PDSCH (or PUSCH) mapping type A. PDSCH (or PUSCH) that is transmitted using a mini slot may be referred to as PDSCH (or PUSCH) mapping type B.

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as a TTI, or one slot or one mini slot may be referred to as a TTI. In other words, at least one of the subframe and the TTI may be a subframe (1 ms) in existing LTE, may be a period shorter than 1 ms (for example, 1 to 13 symbols), or may be a period longer than 1 ms. A unit representing the TTI may be referred to as a slot, a mini slot, or the like, instead of a subframe.

Here, for example, the TTI refers to a minimum time unit of scheduling in wireless communication. For example, in an LTE system, the base station performs scheduling of allocating radio resources (frequency bandwidth, transmission power, or the like which can be used in each terminal 20) to each terminal 20 in units of TTIs. The definition of the TTI is not limited thereto.

The TTI may be a transmission time unit such as a channelcoded data packet (transport block), a code block, or a codeword, or may be a processing unit of, for example, scheduling or link adaptation. Furthermore, when a TTI is provided, the time interval (for example, the number of symbols) in which a transport block, a code block, a codeword, or the like is actually mapped may be shorter than the TTI.

When one slot or one mini slot is referred to as a TTI, one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than a common TTI may be referred to as a reduced TTI, a short TTI, a partial TTI (a partial or fractional TTI), a reduced subframe, a short subframe, a mini slot, a sub slot, a slot, or the like.

Furthermore, a long TTI (for example, a normal TTI, a subframe, etc.) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain, and may include one or more consecutive subcarriers in the frequency domain. The number of subcarriers included in an RB may be the same, irrespective of the numerology and may be, for example, 12. The number of subcarriers included in an RB may be determined based on numerology.

Furthermore, the time field of an RB may include one or more symbols and may have a length of one slot, one mini slot, one subframe, or one TTI. One TTI, one subframe, or the like may be formed with one or more resource blocks.

Furthermore, one or more RBs may be referred to as a physical resource block (PRB: Physical RB), a subcarrier group (SCG: SubCarrier Group), a resource element group (REG: Resource Element Group), a PRB pair, an RB pair, or the like.

Furthermore, a resource block may be formed with one or more resource elements (REs: Resource Elements). For example, one RE may be a radio resource field of one subcarrier and one symbol.

A bandwidth part (BWP: Bandwidth Part) (which may be referred to as a partial bandwidth or the like) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include BWP for UL (UL BWP) and BWP for DL (DL BWP). One or more BWPs may be configured in one carrier for the UE.

At least one of configured BWPs may be active, and the UE need not assume that predetermined signals/channels are transmitted and received outside an active BWP. Furthermore, a "cell", a "carrier", or the like in the present disclosure may be replaced with a "BWP".

Structures of the radio frame, the subframe, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the cyclic prefix (CP: Cyclic Prefix) length, and the like can be variously changed.

In the present disclosure, for example, when an article such as "a", "an", or "the" in English is added by a translation, the present disclosure may include a case in which a noun following the article is the plural.

In the present disclosure, "A and B are different" may mean "A and B are different from each other". However, this may also mean "A and B are different from C". Terms such as "separated" or "combined" may be interpreted as well as "different".

Each aspect/embodiment described in the present disclosure may be used alone, in combination, or may be switched in accordance with the implementation. Furthermore, notification of predetermined information (for example, notification of "being X") is not limited to notification performed explicitly, but may be performed implicitly (for example, not notifying the predetermined information).

Note that PDSCH in this disclosure is an example of a downlink shared channel. PDCCH is an example of a downlink control channel.

Although the present disclosure is described above in detail, it is obvious to those skilled in the art that the present disclosure is not limited to the embodiment described in the present disclosure. The present disclosure may be implemented as revised and modified embodiments without departing from the gist and scope of the present disclosure as set forth in the accompanying claims. Accordingly, the description of the present disclosure is for the purpose of illustration and does not have any restrictive meaning to the present disclosure.

### [DESCRIPTION OF THE REFERENCE NUMERALS]

- 10: Base station
- 110: Transmitting unit
- 120: Receiving unit
- 130: Configuration unit
- 140: Control unit
- 20: Terminal
- 210: Transmitting unit
- 220: Receiving unit
- 230: Configuration unit
- 240: Control unit
- 1001: Processor
- 1002: Storage device
- 1003: Auxiliary storage device
- 1004: Communication device
- 1005: Input device
- 1006: Output device

## Claims

1. A terminal comprising:
a receiving unit configured to receive a downlink control channel and a plurality of downlink shared channels that are scheduled; and
a control unit configured to assume, when receiving the downlink shared channels, that there are a plurality of starting positions of the downlink shared channels in a time domain, in slots in which LBT (Listen Before Talk) is needed or in slots in which a periodicity of monitoring of the downlink control channel can be one slot or longer, among slots in which the plurality of downlink shared channels are scheduled.

2. The terminal according to claim 1, wherein, when receiving the downlink shared channels, the control unit assumes the plurality of starting positions of the downlink shared channels in the time domain in a first slot among the slots in which the plurality of downlink shared channels are scheduled.

3. The terminal according to claim 1, wherein the plurality of starting positions are determined by adding an integer multiple of a predetermined length L to one starting position S.

4. The terminal according to claim 1, wherein, when receiving the downlink shared channels, in slots other than a first slot and the slots in which LBT is needed, among the slots in which the plurality of downlink shared channels are scheduled, the control unit assumes starting positions of the downlink shared channels in the time domain are at a top of a slot.

5. A terminal comprising:
a receiving unit configured to receive a downlink control channel;
a transmitting unit configured to transmit a plurality of uplink shared channels that are scheduled; and
a control unit configured to assume, when transmitting the uplink shared channels, a plurality of starting positions of the uplink shared channels in a time domain, in slots in which LBT (Listen Before Talk) is needed or in slots in which a periodicity of monitoring of the downlink control channel can be one slot or longer, among slots in which the plurality of uplink shared channels are scheduled.

6. A base station comprising:
a transmitting unit configured to transmit a downlink control channel and a plurality of downlink shared channels that are scheduled; and
a control unit configured to assume, when transmitting the downlink shared channels, a plurality of starting positions of the downlink shared channels in a time domain, in slots in which LBT (Listen Before Talk) is needed or in slots in which a periodicity of monitoring of the downlink control channel can be one slot or longer, among slots in which the plurality of downlink shared channels are scheduled.

7. A communication method comprising:
receiving a downlink control channel and a plurality of downlink shared channels that are scheduled; and
when receiving the downlink shared channels, assuming a plurality of starting positions of the downlink shared channels in a time domain, in slots in which LBT (Listen Before Talk) is needed or in slots in which a periodicity of monitoring of the downlink control channel can be one slot or longer, among slots in which the plurality of downlink shared channels are scheduled.
